Europäisches Patentamt

**European Patent Office**

Office européen des brevets

(19)

(11) Publication number: **0 201 303**
A2

## (12) EUROPEAN PATENT APPLICATION

(21) Application number: **86303386.6**

(22) Date of filing: **02.05.86**

(51) Int. Cl.⁴: **B 29 C 51/32,** B 29 C 51/44,
B 29 C 51/04

(30) Priority: **03.05.85 GR 8510778**
**14.06.85 GB 8515089**

(43) Date of publication of application: **12.11.86**
**Bulletin 86/46**

(84) Designated Contracting States: **AT BE CH DE FR GB IT LI LU NL SE**

(71) Applicant: **Panagiotopoulos, Panayotis Christos, 7 Panetoliou Str. Peristeri, Athens (GR)**

(72) Inventor: **Panagiotopoulos, Panayotis Christos, 7 Panetoliou Str. Peristeri, Athens (GR)**

(74) Representative: **Raynor, John et al, W.H. Beck, Greener & Co 7 Stone Buildings Lincoln's Inn, London WC2A 3SZ (GB)**

(54) **Mould, machine, and method for thermoforming.**

(57) A thermoforming machine for forming articles from a thermoplastic sheet, comprising means defining a thermoforming zone, means for transporting a sheet of thermoplastic material into the thermoforming zone, means for heating the sheet of thermoplastic material to render it capable of being thermoformed in the thermoforming zone, the thermoforming zone comprising a forming surface (3, 4) corresponding to the shape of the article to be formed, means 23 for applying a differential pressure to opposite sides of the thermoplastic sheet material in the thermoforming zone to cause the sheet to conform to the shape of the moulding surface, and a die (7, 8) disposed around the moulding surface to sever the formed article from the thermoplastic sheet on completion of the moulding operation, characterized in that the moulding surface (3, 4), is formed in two parts, a first part including a die surface (7) of the said cutting die, and a second part (3) adapted to move relative to the first part to permit the formed article to be severed from the sheet without the formation of a peripheral lip, and without damage to the formed articles.

- 1 -

## MOULD, MACHINE, AND METHOD FOR THERMOFORMING

This invention relates to a thermoforming machine, and to a method of thermoforming a thermoplastic material, and is particularly concerned with a machine to enable the production of a thermoformed article without a peripheral lip.

Thermoforming is a very widely used technique in the formation of various plastics articles, and is generally carried out by heating a thermoplastic sheet to a temperature above its thermoforming temperature and then forcing it to conform to a moulding surface by the application of a vacuum and/or application of air pressure. A typical thermoforming operation suitable for producing a concave or cup-like structures, is so-called "plug-assist forming", in which a pre-forming tool or "plug" is first brought into contact with the heated thermoplastic sheet to urge it into a convex mould. Air pressure is then applied to one side of the sheet, and/or a vacuum is applied to the other, to bring the softened thermoplastic sheet into contact with the moulding surface of the mould.

The severing of the formed article from the remainder of the sheet may be carried out in one of a number of ways. A common method is to provide a die surrounding the mould, and arrange to sever the article from the sheet either simultaneously with its formation, or immediately after it has been formed. In existing thermoforming machines, this invariably results in a peripheral lip being produced on the formed article.

An alternative is to cut the formed articles from the sheet at a separate station in the machine. By this method, it is possible to produce articles with no peripheral lip, but the process is slower, and requires more complex equipment. If a cutting die is used to stamp the moulded article from the sheet at the moulding station, without providing a peripheral lip, this can only be done by causing the cutting die to enter the mould, and this distorts and causes damage to the formed article.

In accordance with this invention, there is provided a thermoforming machine for forming articles from a thermoplastic sheet, comprising

means defining a thermoforming zone,

means for transporting a sheet of thermoplastic material into the thermoforming zone,

means for heating the sheet of thermoplastic material to render it capable of being thermoformed in the thermoforming zone,

the thermoforming zone comprising a forming surface corresponding to the shape of the article to be formed, means for applying a differential pressure to opposite sides of the thermoplastic sheet material in the thermoforming zone to cause the sheet to conform to the shape of the moulding surface, and a

0201303

- 3 -

die disposed around the moulding surface to sever the formed article from the thermoplastic sheet on completion of the moulding operation, characterized in that the moulding surface is formed in two parts, a first part including a die surface of the said cutting die, and a second part adapted to move relative to the first part to permit the formed article to be severed from the sheet without the formation of a peripheral lip, and without damage to the formed articles.

The two parts of the moulding surface are preferably substantially continuous during the thermoforming operation, but may be separated, for example by a pneumatically or hydraulically operable piston or by mechanical or electrical means, to cause movement of the two parts of the moulding surface relative to each other, and thereby allow the formed article to move away from the cutting die during the cutting operation, so that the article is not deformed or otherwise damaged during the cutting operation.

The moulding surface may preferably define a concave mould, for example a concave mould within a plug-assist forming machine.

In accordance with a second aspect of the invention, there is provided a mould for a thermoforming machine, having two relatively moveable parts, a first part including a first moulding surface and a die surface, and a second part including a second moulding surface, the second part being moveable between a first position, in which the second moulding surface is substantially continuous with the first moulding surface of the first part, and a second position, in which an article formed on the moulding surface may be cut on the die surface of the first part, without the production of a peripheral lip, and without damage to a formed article within the mould.

The mould in accordance with the invention may be incorporated within any conventional type of thermoforming machine, and is applicable to, for example, drape forming, pre-stretch forming, plug and ring forming, slip forming, snapback forming, reverse-drill forming, or air-slip forming, but is particularly applicable for use with plug-assist forming.

A preferred embodiment of the invention will now be described with reference to the accompanying drawings, in which;

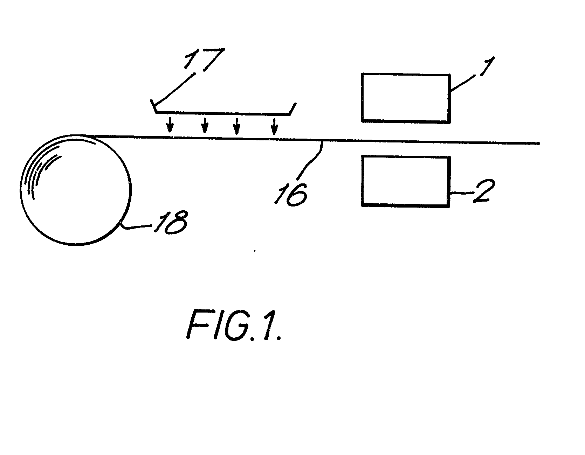

Figure 1 is a schematic diagram of a thermoforming machine in accordance with the invention, and

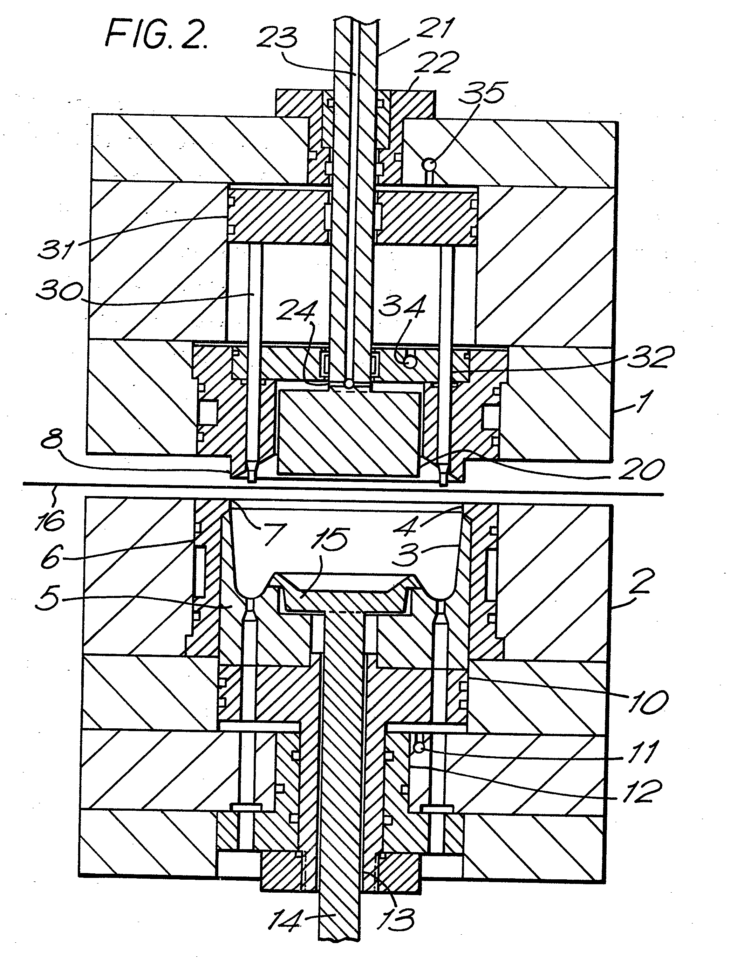

Figure 2 is a schematic sectional diagram of a plug-assist mould in accordance with the invention, as incorporated in the machine of Figure 1. Referring first to Figure 1, a thermoforming machine comprises a thermoforming machine defined by mould parts 1 and 2, and means for carrying a continuous sheet 16 of a thermoplastic material to the thermoforming zone. The sheet 16 is supplied from a roll 18 in a conventional manner. A radiant heater 17 heats the sheet of thermoplastic material 16 prior to its passage into the thermoforming zone, to the appropriate temperature for the thermoplastic material concerned. The parts 1 and 2 of the mould assembly are shown in more detail in Figure 2.

As shown in Figure 2, the mould assembly consists of upper part 1 and lower part 2. The lower part 2 of the mould assembly contains a concave mould, which is formed in two part parts, an inner part 5, having a moulding surface 3, and an outer part 6, having an moulding surface 4. The outer part 6 of the mould also has a die surface 7, adapted to co-operate with a die surface 8 provided on the upper part of a mould assembly 1 as will be described hereinafter.

The inner part 5 of the mould is able to slide within the outer part 6, so that, when the part 5 is in its upper position, the surface 3 is continuous with the surface 4 of the outer part 6 of the mould. When the inner part 5 of the mould is in its lower position, a gap exists between the surfaces 3 and 4,

- 6 -

and the space defined by the surfaces 3 and 4 is enlarged, to allow an article formed therein to move downwardly with the inner part 5 of the mould.

The inner part 5 of the mould is moveable between its two positions by pneumatically operated piston 10, which is supplied with air under pressure through a conduit 11. Piston 10 slides within a bushing 12, and is itself provided with a central bore 13, to accommodate a rod 14.

The rod 14 carries a cap 15, which forms a part of the lower surface of the moulding surface in the mould. The rod 14 is moveable by pneumatic means (not shown), to eject an article after formation.

The upper part of the mould assembly consists of a plug 20 of conventional form connected to a rod 21, adapted to slide in a bushing 22. The rod 21 is provided with an axial bore 23, connected to a supply of pressurized air by a valve (not shown) the bore 23 communicates with the space surrounding plug 20, by means of vents 24 provided in the lower part of the shaft 21.

Also included in the upper part of the mould 1 are punches 30, connected to piston 31, and adapted to slide in slots 32.

Air inlets 34 and 35 are provided to admit air under pressure to either side of piston 31, to raise or lower punches 30.

The operation of the mould is as follows. As illustrated in Figure 1, the sheet 16 is heated by heater 17 to the appropriate thermoforming temperature. The two parts 1 and 2 of the mould assembly are then brought together by pneumatic means (not shown), and simultaneously, the plug 20 is moved downwardly in bushing 22, to pre-form the sheet 16 into the mould, 5, 6. Air is then applied to bore 23, and thence to the upper side sheet 16, to force sheet 16 onto the moulding surface 3, 4, and thereby form the article. In the embodiment shown, the forming operation is carried out simply by application of air pressure to one side of the sheet. However, it is of course possible to use a combination of air pressure on one side of the sheet, and a vacuum applied to the other, or simply a vacuum applied to one side of the sheet in order to carry out the thermoforming operation.

If it is desired to punch holes in the base of the formed article air under pressure is applied to inlet 35, to force piston 31, and thus punches 30 downwardly, to the base of the formed article.

After the article has cooled slightly, the mould assembly parts 1 and 2 are again moved relatively to each other to cause the die surfaces 7 and 8 to

- 8 -

co-operate, to sever the formed article from the remainder of the sheet 16. Simultaneously, pressure is released from inlet 11, to allow piston 10, and thereby mould part 5 to fall, so that the formed article within the mould can also fall by a small amount (corresponding to the movement of the piston 10). This small degree of movement ensures that the article is not deformed or otherwise damaged by the severing operations. If desired, downward movement of mould part 5 may be pneumatically assisted, for example by applying pressure to the upperside, or a vacuum to the underside of piston 10.

The parts 1 and 2 are then caused to open, and the rod 14 is lifted to eject the formed article from the mould.

Because the severing of the article from the sheet 16 is carried out at the lip of the die 7, no peripheral lip is formed on the article and no post-trimming of waste is required.

Although the apparatus has been described with particular reference to plug forming, and the use of a concave mould, it is equally applicable to other forms of thermoforming, for example those listed above, using a convex or concave mould.

In a further aspect of the invention, there is provided a method of making a moulded article, which method comprises forming an article in a mould at a thermoforming station from a thermoplastic sheet, and severing the article from the sheet at the

- 9 -

thermoforming station, in particular by punching, without the formation of a peripheral lip, whilst allowing the article to move in the mould to prevent damage thereto during the severing operation. The invention also provides articles formed utilising the mould and apparatus of the invention, and in accordance with the above method.

In accordance with the invention, it is possible to produce thermoformed articles of a type which hitherto it has been practical to make only by by injection moulding. Thermoforming in accordance with the invention is particularly advantageous as compared with injection moulding, because it allows for thinner wall thickness with consequent saving of materials, and much higher throughput rates, for comparable size of plant. Furthermore, it is much more straightforward using thermoforming techniques to produce cup-like article which taper towards their base, for example as are used as bases for thermoplastic drinks bottles and alike. Formation of such bases with a downward taper provides two distinct advantages. First, the articles stack much more readily together, and thus reduce storage and transporation costs. Secondly, printing of advertising slogans and the like is facilitated, because commercially available printing machines rely on a tapered shape so that the articles can be held in position on the printing machine by air pressure. Furthermore, the capital cost of a thermoforming machine in accordance with the invention is substantially less than that of the injection moulding machines which have hitherto been necessary to produce comparable articles, and the energy costs during operation are also substantially less.

As indicated above, the invention is particularly advantageous in the production of thermoformed base for bottles and the like. The method of the invention also finds utility in the production of any thermoformed article in which no peripheral lip is desired, for example cones for supporting textiles fibres, and thermoformed plastic trays for the packing of soft drinks and the like. Any number of moulds in accordance with the invention may be incorporated in the thermoforming machine in accordance with the invention, so that a plurality of articles may be formed together.

It will be readily apparent to one skilled in the art that, although the invention has been described above with respect to a plug-assist forming machine, a wide range of other variations are possible within the scope of the appended claims.

- 11 -

CLAIMS

1. A thermoforming machine for forming articles from a thermoplastic sheet, comprising

means defining a thermoforming zone,

means for transporting a sheet of thermoplastic material into the thermoforming zone,

means for heating the sheet of thermoplastic material to render it capable of being thermoformed in the thermoforming zone,

the thermoforming zone comprising a forming surface (3) corresponding to the shape of the article to be formed, means (23) for applying a differential pressure to opposite sides of the thermoplastic sheet material in the thermoforming zone to cause the sheet to conform to the shape of the moulding surface, and a die (7, 8) disposed around the moulding surface to sever the formed article from the thermoplastic sheet on completion of the moulding operation, characterized in that the moulding surface is formed in two parts, a first part (4) including a die surface (7) of the said cutting die, and a second part (3) adapted to move relative to the first part (4) to permit the formed article to be severed from the sheet without the formation of a peripheral lip, and without damage to the formed articles.

2. A thermoforming machine as claimed in claim 1 where as the two parts (3, 4) of the moulding surface

0261303

- 12 -

are substantially continuous during the thermoforming operation.

3. A machine as claimed in claim 1 or claim 2, including a pneumatically operable piston (10) to cause movement of the two parts of the moulding surface relative to each other.

4. A method as claim in any one of the preceding claims, where in the moulding surface (3) defines a concave mould.

5. A machine as claimed in claim 4, including a plug member (20) to assist forming of the article in the mould.

6. A mould for a thermoforming machine, having two relatively moveable parts, a first part including a first moulding surface (4) and a die surface (7), and a second part including a second moulding surface (3), the second part being moveable between a first position, in which the second moulding surface (3) is substantially continuous with the first moulding surface (4) of the first part, and a second position, in which an article formed on the moulding surface may be cut out the die surface of the first part, without the formation of a peripheral lip, and without damage to a formed article within the mould.

7. A mould as claimed in claim 6, including a pneumatically operable piston (10) adapted to move the two parts of the mould relative to each other.

- 13 -

8.    A mould as claimed in claim 6 or claim 7, which is plug-assisted.

9.    A method of making a moulded article, which method comprises forming an article in a mould at a thermoforming station from a thermoplastic sheet, and severing the article from the sheet at the thermoforming station, without the formation of a peripheral lip, whilst allowing the article to move in the mould to prevent damage thereto during the severing operation.

10.    A thermoformed article, produced utilising a machine as claimed in any one of claims 1 to 5, a mould as claimed of any one of claims 6-8, or by a method as claimed in claim 9.

FIG.1.

FIG. 2.